# EUROPEAN PATENT APPLICATION

(11) **EP 1 350 712 A2**
(43) Date of publication of application: **08.10.2003**
(21) Application number: 03007586.5
(22) Date of filing: 02.04.2003
(51) Int. Cl.: B62D 25/20

(54) **Assembly for attaching undercover onto underside of car floor panel**

(30) Priority: 05.04.2002 JP 2002103469
(71) Applicant: Newfrey LLC, Newark, Delaware 19711 (US)
(72) Inventor: Kanie, Hideki, c/o Pop Rivet Fastener K.K., Toyohashi-shi, Aichi-ken (JP)
(74) Representative: Haar, Lucas H., Dipl.-Ing.

(57) **Abstract**

The invention describes an undercover attaching assembly capable of facilitating an operation of attaching an undercover and allowing the attached undercover to be desirably displaced along the underside of a floor panel due to its thermal deformations such as thermal contraction . Therfor, studs are fixed at a predetermined position of the underside of a floor panel of a car body. Each of the studs is adapted to be inserted into a mounting hole of an undercover and engaged with a fastener so as to attach the undercover onto the underside of the floor panel. The fastener comprises a first clip 7 and a second clip 9. The first clip 7 includes an outer tubular portion 10 adapted to be inserted into the mounting hole 5. The second clip 9 includes an inner tubular portion 15 adapted to be inserted into the outer tubular portion 10, and an engagement pawl 19 adapted to be engaged with the stud. The first clip 7 is formed with a first flange 11 adapted to be brought into contact with the undercover. The second clip 9 is formed with a second flange 17 adapted to be brought into contact with the undercover when the inner tubular portion 15 is inserted into the outer tubular portion 10. The outer tubular portion and the inner tubular portion are formed with first and second engagement portions 13, 23 for coupling the first and second clips together, respectively. The first and second flanges 11, 17 are adapted to clamp the undercover therebetween with a predetermined claming force allowing the attached undercover to be displaced along the underside of the floor panel due to its thermal deformation.

## Description

The present invention relates to an undercover attaching assembly for attaching an undercover onto the underside of a floor panel of a car body. In particular, the present invention relates to an undercover attaching assembly comprising studs fixed at predetermined positions of the underside of a floor panel of a car body, mounting holes formed in an undercover to receive the respective studs therein, and fasteners for attaching the undercover onto the underside of the floor panel by engaging the fasteners with the respective studs which are inserted into the respective mounting hole.

It is well known to attach an undercover onto the underside of a floor panel of a car body, for example, as disclosed in Japanese Utility Model Laid-Open No. 59-129676. In order to attach an undercover onto the underside of a floor panel of a car body, a plurality of threaded studs are fixed at predetermined positions of the underside of the floor panel, and a plurality of mounting holes are formed at predetermined positions of the undercover to receive the respective studs therein. Then, the undercover is positioned to the underside of the floor panel to insert the studs into the corresponding mounting holes, and nuts are screwed onto the respective studs with a tool or the like to complete an attaching operation for the undercover onto the underside of the floor panel. This attaching operation is troublesome and/or time-consuming because of the need for fastening a number of nuts to the studs. In particular, the undercover has a large area, and thereby it is very tough to fasten the nuts while keeping balance.

Further, when the undercover is attached onto the underside of the floor panel by tightly screwing the nut onto the threaded stud to prevent the undercover from dropping off, a fastening stress is concentrated on the fastened region. On the other hand, the undercover is made of plastic material. Thus, the undercover tends to expanding and shrinking due to its temperature change according to heating under high-temperature environment during engine running and cooling down after engine stop. Since the undercover is tightly fastened by the nut at the predetermined positions thereof, it can be plastically deformed around the fastened regions. For that reason, it is desired to facilitate the operation of attaching the undercover while maintaining a reliable attachment and to allow the attached undercover to be desirably displaced along the underside of the floor panel due to its thermal expansion and contraction so as to prevent undesirable deformation of the undercover.

Japanese Utility Model Laid-Open No. 62-59311 (=Japanese Utility Model Publication No. 3-19603) discloses an attaching assembly for attaching a panel such as an insulating panel, but not an undercover. In this attaching assembly, a tubular member is disposed around a stud in advance to position a panel, and a clip is engaged with the stud, so that the clip can be coaxially attached to the stud to maintain a high fixing force stably. However, if this attaching assembly is used to attach an undercover, it will be required to perform troublesome operation for attaching a plurality of tubular members to the corresponding studs in advance. Further, it cannot be assured to allow the attached undercover to be displaced along the underside of a floor panel due to its thermal deformations. Japanese Utility Model Laid-Open No. 7-41035 (Japanese Utility Model Registration No. 2584386) discloses a two-component clip for attaching a flexible panel such as a trim to a car body. In this clip, a first component has a hollow shank into which a hollow base of a second component is previously fitted to assemble the first and second components together, and the resulting assembly is inserted into and attached to the flexible panel from one side thereof. Even if this clip is applied to an undercover, however, it cannot be inserted into the undercover from one side thereof because the undercover has a high rigidity and is different from the flexible panel such as a trim,. Thus, this clip cannot be inherently applied to the attachment of undercovers. Japanese Utility Model Laid-Open No. 8-001091 (Japanese Utility Model Registration No. 2577997) discloses a two-component clip for attaching a panel to a car body. This clip comprises a male component with a flange and a female component with a flange. The male and female components are inserted into a mounting hole of the panel, respectively, from both sides of the panel to couple them together so as to clamp the panel therebetween. Then, the clip is engaged with a stud to fix the panel to the car body. The specification and drawings of Japanese Utility Model Laid-Open No. 8-001091 does not include any description of applying this clip to the attachment of undercovers. In addtion, Japanese Utility Model Laid-Open No. 8-001091 does not include any suggestion of a structure for allowing an attached undercover to be displaced along the underside of a floor panel due to its thermal deformations.

It is therefore an object of the present invention to provide an undercover attaching assembly capable of facilitating an operation of attaching an undercover and allowing the attached undercover to be desirably displaced along the underside of a floor panel due to its thermal deformations such as thermal contraction.

In order to achieve the above object, according to the present invention, there is provided an undercover attaching assembly for attaching an undercover onto the underside of a floor panel of a car body, comprising, studs fixed at predetermined positions of the underside of the floor panel, mounting holes formed in the undercover to receive the studs therein, each of the stud being adapted to be inserted into each of the respective mounting holes and fasteners for attaching the undercover onto the underside of the floor panel, each fastener being engaged with each of the respective studs. The above mentioned fastener comprises a first clip including a hollow outer tubular portion adapted to be inserted into the mounting hole of the undercover; and a second clip including a hollow inner tubular portion adapted to be inserted into the outer tubular portion of the first clip, and an engagement pawl(s) adapted to be engaged with the stud. The first clip is formed with a first flange adapted to be brought into contact with one side of the undercover when the outer tubular portion is inserted into the mounting hole; the second clip is formed with a second flange adapted to be brought into contact with the other surface of the undercover when the inner tubular portion is inserted into the outer tubular portion; and the outer and inner tubular portions are formed with first and second coupling means for connecting the outer and inner tubular portions to each other, whereby when the outer tubular portion is inserted into the mounting hole of the undercover and then the inner tubular portion is inserted into the outer tubular portion to couple the first and second clips together by the coupling means, the first and second flanges are brought into contact with the respective sides of the undercover around the periphery of the mounting hole to clamp the undercover therebetween. The mounting hole of the undercover has a diameter larger than the outer diameter of the outer tubular portion to allow the undercover to be displaced along the underside of the floor panel due to its thermal deformation, and the first and second clips are formed to allow the first and second flanges to clamp the undercover therebetween with a predetermined claming force capable of clamping the undercover without its wobbling movement in the axial direction of the stud while allowing the undercover to be displaced along the underside of the floor panel due to its thermal deformation.

According to the above assembly, the first and second flanges of the respective first and second clips can be fastened to the undercover while clamping the undercover therebetween. That is, the fastener can be fastened to the undercover in advance. The previously fastened fastener makes it possible to readily carry the undercover with the fastener held therein. Thus, the undercover can be attached onto the underside of the floor panel of the car body by a simple attaching operation of adequately positioning the undercover with the fastener to the underside of the floor panel and then pressing the undercover to the underside of the floor panel while inserting the stud into the fastener. Further, the first and second clips are formed to allow the first and second flanges to clamp the undercover therebetween with a predetermined clamping force capable of clamping the undercover without its wobbling movement in the axial direction of the stud while allowing the undercover to be displaced along the underside of the floor panel due to its thermal deformation. Thus, after attaching, the undercover can be displaced along the underside of the floor panel due to its thermal deformation such as thermal contraction to eliminate the risk of plastic deformation of the undercover.

Preferably, in the above undercover attaching assembly, the stud is a threaded stud, and the second clip includes the inner tubular portion having the engagement pawl formed in the inside thereof, the second flange is formed at one of the ends of the inner tubular portion, and a polygonal tubular portion extends from the second flange in the form of extending the inner tubular portion. This polygonal tubular portion may be formed as a tubular body having an inner diameter greater than the outer diameter of the thread of the stud, so as to allow the polygonal tubular portion to be free from engagement with the thread of the stud. The polygonal tubular portion may also be operable to be rotated about the axis of the stud by a tool which can be engaged with the polygonal tubular portion, so as to either provide tighter fastening of the engagement pawl or release the fastening.

The second flange may have an outer edge formed to extend toward the other end of the inner tubular portion so as to allow the second flange to be brought into contact with one side of the undercover only at the outer edge while maintaining the predetermined clamping force. Further, the first flange may have a surface formed in a flat plate shape capable of being brought into contact with the other surface of the undercover in its entirety.

Furthermore, a portion of the outer tubular portion may be divided by an axially extending slit to form a first coupling engagement portion serving as the first coupling means of the first clip, and the outer surface of the inner tubular portion is formed with a second coupling engagement portion serving as the second coupling means of the second clip. This second coupling engagement portion is adapted to be engaged with the first coupling engagement portion. In this case, the first and second coupling engagement portions are formed to allow the first and second flanges to be spaced apart from each other by an axial distance equal to or slightly less than the thickness of the undercover so as to provide the predetermined clamping force, under the condition that the first and second coupling engagement portions are engaged with one another.

Alternatively, in the undercover attaching assembly, the stud may be a threaded stud, and the second clip may include the inner tubular portion having the engagement pawl formed in the inside thereof, the second flange may be formed at one of the ends of the inner tubular portion, and a polygonal tubular portion may extend from the second flange in the form of extending the inner tubular portion. This polygonal tubular portion may be formed as a tubular body having an inner diameter less than the outer diameter of the thread of the stud, so as to allow the polygonal tubular portion to be engaged with the thread of the stud. The polygonal tubular portion may also be operable to be rotated about the axis of the stud by a tool engaged with the polygonal tubular portion, so as to allow the polygonal tubular portion to either be threadedly engaged with the stud or release the threaded engagement with the stud. According to this structure, the engagement pawl of the second clip can be used for a temporary fastening, and a tight final fastening can be achieved by a combination of the engagement of the engagement pawl and the threaded engagement of the polygonal tubular portion.

The first flange may be formed at one of the ends of the outer tubular portion of the first clip. This first flange has an outer edge formed to extend toward the other end of the outer tubular portion so as to allow the first flange to be brought into contact with one side of the undercover only at the outer edge while maintaining the predetermined clamping force.

The second flange may have a surface formed in a flat plate shape capable of being brought into contact with the other surface of the undercover in its entirety.

Further, a portion of the outer tubular portion may be divided by an axially extending slit to form a first coupling engagement portion serving as the first coupling means of the first clip, and the second coupling means of the second clip may be a second coupling engagement portion adapted to be engaged with the first coupling engagement portion. In this case, the first and second coupling engagement portions are formed to allow the first and second flanges to be spaced apart from each other by an axial distance equal to or slightly less than the thickness of the undercover so as to provide the predetermined clamping force, under the condition that the first and second coupling engagement portions are engaged with one another.

Furthermore, the inner tubular portion of the second clip may have an axial length which allows the first flange to be brought into contact with the underside of the floor panel and allows the second flange to press the undercover, when the top end of the inner tubular portion is brought into contact with the underside of the floor panel by the rotation of the polygonal tubular portion. According to this structure, the undercover can be firmly attached onto the underside of the floor panel while limiting the clamping force based on the first and second clips within a certain range to allow the undercover to be displaced along the underside of the floor panel due to its thermal deformation such as thermal contraction.

With reference to the drawings, embodiments of the present invention will now be described, wherein:
Fig. 1 is a perspective view showing the underside of a floor panel of a car body and undercovers.
Fig. 2 is a front view of a first clip of a fastener in an undercover attaching assembly according to a first embodiment of the present invention.
Fig. 3 is a bottom view of the first clip in Fig. 2.
Fig. 4 is a sectional view of the first clip taken along the line A-A in Fig. 3.
Fig. 5 is a top plan view of a second clip of the fastener in the undercover attaching assembly according to the first embodiment of the present invention.
Fig. 6 is a front view of the second clip in Fig. 5.
Fig. 7 is a bottom view of the second clip in Fig. 5.
Fig. 8 is a sectional view of the second clip taken along the line B-B in Fig. 5.
Fig. 9 is a perspective bottom view of the second clip in Fig. 5.
Fig. 10 is a sectional view showing the condition before the undercover is clamped by the fastener according to the first embodiment.
Fig. 11 is a view showing the condition before the undercover clamped by the fastener according to the first embodiment is attached onto the underside of the floor panel of the car body having a stud.
Fig. 12 is a view showing the condition after the undercover clamped by the fastener according to the first embodiment is attached onto the underside of the floor panel of the car body having the stud.
Fig. 13 is a perspective bottom view of a first clip of a fastener in an undercover attaching assembly according to a second embodiment of the present invention.
Fig. 14 is a bottom view of the first clip in Fig. 13.
Fig. 15 is a sectional view of the first clip taken along the line C-C in Fig. 14.
Fig. 16 is a perspective bottom view of a second clip of the fastener in the undercover attaching assembly according to the second embodiment of the present invention.
Fig. 17 is a front view of the second clip in Fig. 16.
Fig. 18 is a bottom view of the second clip in Fig. 16.
Fig. 19 is a sectional view of the second clip taken along the line D-D in Fig. 18.
Fig. 20 is a sectional view showing the condition before the undercover is clamped by the fastener according to the second embodiment.
Fig. 21 is a view showing the condition after the undercover is clamped by the fastener in Fig. 20.
Fig. 22 is a view showing the condition before the undercover clamped by the fastener according to the second embodiment is attached onto the underside of the floor panel of the car body having the stud.
Fig. 23 is a view showing the condition after the undercover clamped by the fastener according to the second embodiment is attached onto the underside of the floor panel of the car body having the stud.

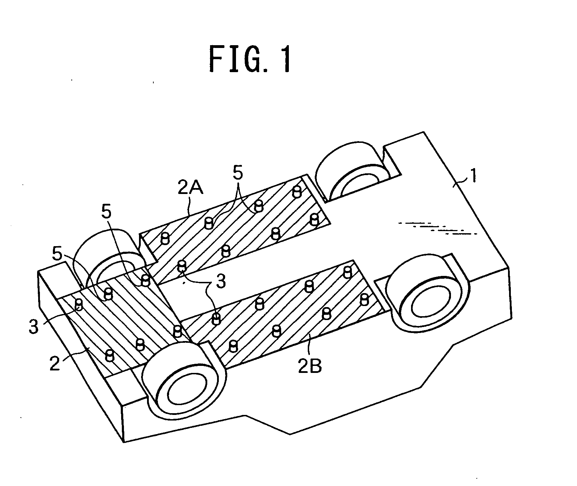

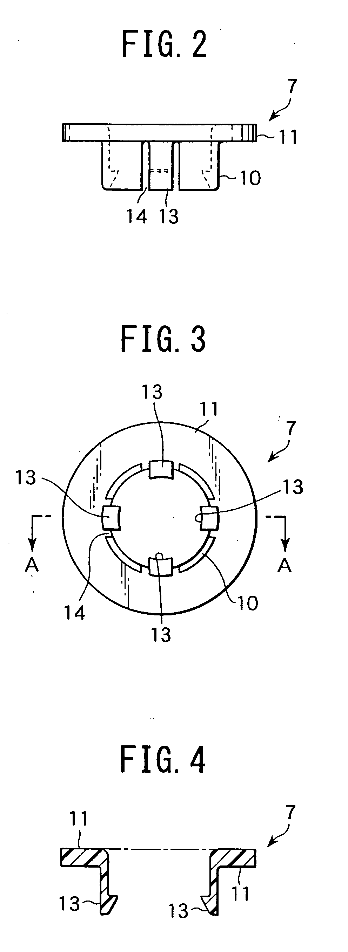

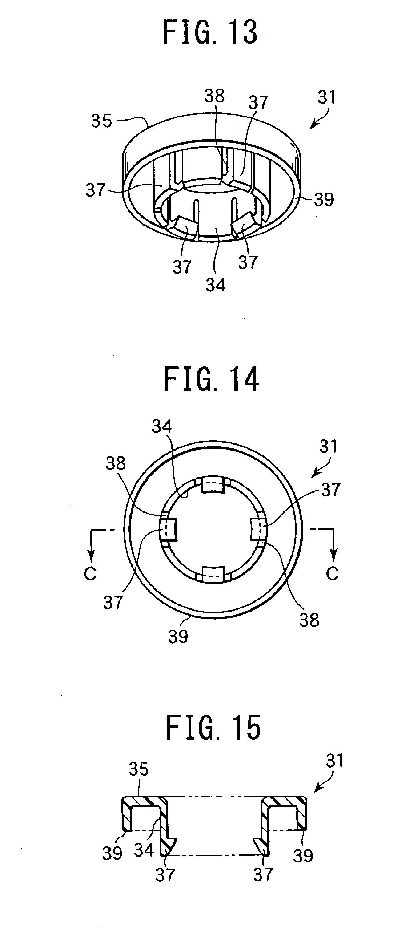

Fig. 1 shows several kinds of undercovers 2, 2A and 2B to be attached onto the underside 1 of a floor panel of a car body. For attaching the undercovers 2, 2A and 2B, a plurality of studs 3 are fixed onto the underside 1 of the floor panel at predetermined positions thereof with welding or the like. The stud 3 may be a threaded stud having a threaded portion formed in its outer peripheral surface or may be a grooved stud having a groove formed in its outer peripheral surface. In the embodiments, the threaded stud is selectively employed as the stud 3 in view of convenience for a detaching operation. A plurality of mounting holes 5 are formed in the undercovers 2, 2A and 2B at predetermined positions in conformity with the respective positions of the studs 3 to allow the studs to be inserted therethrough. Among the mounting holes 5, the hole used as a reference position of the undercover has a size approximately equal to the outer diameter of the stud, but the remaining mounting holes are formed larger than the outer diameter of the stud. In the present invention, the size of each of the mounting holes 5 other than the particular mounting hole as the reference position of the undercover is formed larger than the outer diameter of an outer tubular portion of a first clip of a fastener of the present invention to allow the undercover to be displaced along the underside of the floor panel due to its thermal deformation, as described in detail later. An undercover attaching assembly according to an embodiment of the present invention comprises a fastener to be fastened to the undercovers 2, 2A and 2B having the above mounting holes, and this fastener is adapted to be engaged with each of the studs 3 so as to attach the undercovers to the underside 1 of the floor panel. One fastener according to a first embodiment of the present invention is shown in Figs. 2 to 12, and another fastener according to a second embodiment of the present invention is shown in Figs. 13 to 23.

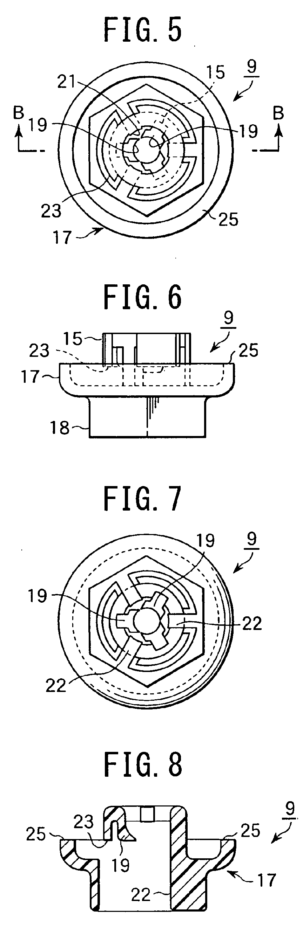

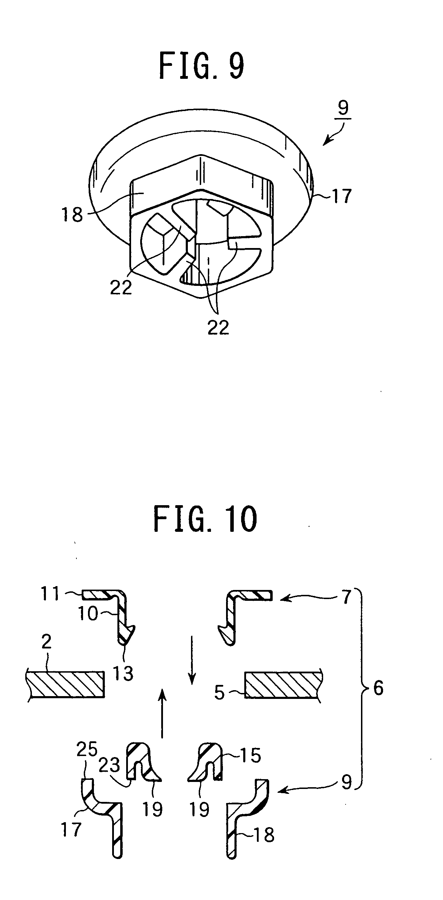

In Figs. 2 to 12, the fastener 6 according to the first embodiment (see Figs. 10 to 12) comprises an integrally molded first clip 7 made of synthetic resin as shown in Figs. 2 to 4, and an integrally molded second clip 9 made of synthetic resin as shown in Figs. 5 to 9. As shown in Figs. 10 to 12, the first clip 7 and the second clip 9 are fastened to the undercover 2 (the following description will be made by selecting the undercover 2 for the sake of simplicity but another undercover 2A or 2B may be selected) in such manner that the first and second clips clamp the undercover from its front and rear sides, respectively. The details of the first clip 7 and the second clip 9 will be described with reference to Figs. 2 to 9.

In Figs. 2 to 4, the first clip 7 comprises a hollow outer tubular portion 10 adapted to be inserted into the mounting hole of the undercover, and a first flange 11 formed at one of the ends of the outer tubular portion 10 and adapted to be brought into surface contact with one side of the undercover. The outer tubular portion 10 of the first clip 7 is formed as a hollow cylindrical body having an inner diameter greater than the outer diameter of an inner tubular portion (described later) of the second clip so as to receive the inner tubular portion therein. The outer tubular portion 10 includes a first coupling engagement portion 13 serving as first-clip-side coupling means or one of coupling means to coupling both the first clip 7 and the second clip 9 to each other. As shown in Fig. 2, a portion of the outer tubular portion is divided by an axially extending slit 14 to form the first coupling engagement portion 13 having an elongated elastic-engagement-pawl configuration capable of being readily engaged with second-clip-side coupling means or the other coupling means (described later) when the inner tubular portion of the second clip 9 is inserted into the outer tubular portion 10. As shown in Fig. 3, a plurality of first coupling engagement portions 13 are formed to reliably maintain the coupling with the second clip 9. The first flange 11 formed in a flat circular plate shape capable of being brought into contact with the surface of the undercover in its entirety.

In Figs. 5 to 9, the second clip 9 comprises a hollow inner tubular portion 15 adapted to be inserted into the outer tubular portion 10 of the first clip 7, a second flange 17 formed at one of the ends of the inner tubular portion 15 and adapted to be brought into contact with the other side of the undercover which is opposite to the first flange 11, and a polygonal (hexagonal in the illustrated embodiment) tubular portion 18 extending from the second flange 17 in the opposite direction with respect to the inner tubular portion 15 in the form of extending the inner tubular portion 15. A plurality (three in the illustrated embodiment) of elastic engagement pawls 19 adapted to be engaged with the stud are provided on the inner side of the inner tubular portion 15 at certain intervals in the circumferential direction. The inner tubular portion 15 is formed as a hollow tubular body having an inner diameter allowing the stud to be received therein and an outer diameter capable of being inserted into the outer tubular portion 10. In the illustrated embodiment, the inner tubular portion 15 is formed in a cylindrical container shape having a stud receiving hole 21 at the other end (the upper end in Figs. 6 and 8) opposite to the second flange 17, and an opening adjacent to the second flange 17. As shown in Figs. 7 and 9, the inner tubular portion 15 is connected to the second flange 17 and the polygonal tubular portion 18 by means of a plurality (three in the illustrated embodiment) of ribs 22 extending along the inner side of the second clip 9 over its entire axial length. The plurality of ribs 22 define a stud receiving space for receiving the stud inside the second flange 17 and the polygonal tubular portion 18, and control the received stud to allow the axis of the received stud to be aligned with the axis of the second clip 9. Each of the engagement pawls 19 elastically extends toward the inside of the stud receiving space formed by the stud receiving hole 21 and the ribs 22, so as to bide into and engage with the threaded portion of the received stud to fasten the second clip 9 to the stud. Preferably, the plurality of the engagement pawls 19 have different axial lengths to allow their edges to be offset in conformity with the thread pitch of the stud, respectively. The stud receiving space of the polygonal tubular portion 18 defined by the plurality of ribs 22 is formed to have an inner diameter greater than the outer diameter of the thread of the stud, so as to allow the stud to be received in the stud receiving space defined by the plurality of ribs 22 without any engagement between the thread of the stud and the ribs 22.

The inner tubular portion 15 having a hollow-cylindrical-container configuration includes a second coupling engagement portion 23 serving as the other coupling means for coupling the second clip 9 to the first clip 7, on the outer periphery thereof adjacent to the second flange 17. As shown in Fig. 5, the second coupling engagement portion 23 is formed as an engagement shoulder extending over the approximately entire circumference of the outer periphery of the inner tubular portion (the engagement shoulder is disconnected in the regions having the ribs 22 connected to the flange and the polygonal tubular portion 18). When the inner tubular portion 15 is inserted into the outer tubular portion 10 of the first clip 7, the first coupling engagement portion 13 is engaged with the second coupling engagement portion 23 to couple the first clip 7 and the second clip 9 together.

As seen in Figs. 7 and 9, the polygonal tubular portion 18 is formed as a hexagonal hollow tubular body, and used to rotate the entire second clip 9 including the inner tubular portion 15 about the axis of the stud. The inner diameter of the polygonal tubular portion 18 is substantially larger than the outer diameter of the stud so that the polygonal tubular portion 18 is not engaged with the stud. As described above, the plurality of axially extending ribs 22 are formed on the inner side of the polygonal tubular portion 18. Around the axis of the second clip 9, these ribs 28 define the stud receiving space having a diameter which allows the axis of the stud to be aligned with the axis of the second clip 9 but does not allows the thread of the stud to be engaged with the ribs. A tool can be engaged with the polygonal tubular portion 18 to rotate the entire second clip 9 including the inner tubular portion 15 about the axis of the stud so as to either provide tighter fastening of the engagement pawls or release the fastening.

As shown in Figs. 5, 6 and 8, the second flange 17 has a circular-ring-shaped outer edge 25 extending toward the upper end of the inner tubular portion 15 to be brought into contact with the surface of the undercover. This shape allows the second flange 17 to be brought into contact with the undercover only at the outer edge 25. On the other hand, the first flange 11 of the first clip 7 is formed in a flat circular plate shape allowing the first flange 11 to be brought into contact with the surface of the undercover in its entirety. The first flange 11 and the second flange 17 can clamp the undercover therebetween while maintaining a predetermined clamping force.

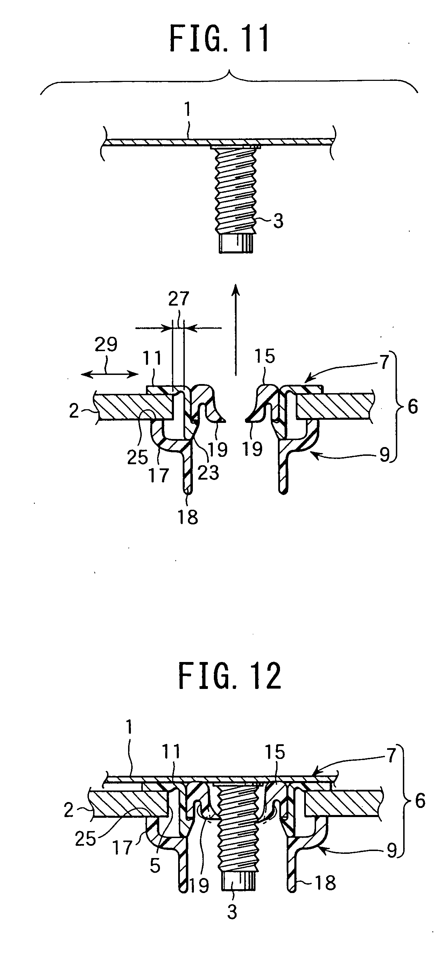

As shown in Fig. 10, the fastener comprises the first clip 7 and the second clip 9. As shown in Fig. 11, the first clip 7 and the second clip 9 of the fastener 6 are coupled with one another while interposing the undercover 2 therebetween to clamp the undercover 2 with a predetermined clamping force. This clamping force based on the first and second flanges 11 and 17 is set at a level capable of clamping the undercover 2 without its wobbling movement in the axial direction of the stud 3 but allowing the undercover to be displaced along the underside of the floor panel due to its thermal deformation. In order to obtain this clamping force, when the first and second coupling engagement portions 13 and 23 are coupled with one another, a pressing force acting from the first and second flanges 11 and 17 of the first and second clips 7 and 9 to the undercover 2 is selectively adjusted to allow the first and second flanges to clamp the undercover 2 without its wobbling movement in the axial direction of the stud 3 but not to excessively press the undercover. Further, the first flange 11 is brought into contact with the surface of the undercover 2 in its entirety but the second flange 17 is brought into contact with the surface of the undercover 2 only at the outer edge 25 to avoid the excessive pressing force and provide a predetermined clamping force allowing the undercover 2 to be displaced along the underside of the floor panel due to its thermal deformation.

A fastening operation of the fastener 6 comprising the first and second clips 7, 9 constructed as described above will be described with reference to Figs. 10 to 12 to clamp the undercover 2 therebetween and then attaching the undercover 2 with the fasteners onto the underside 1 of the floor panel having the studs 3 fixed thereon. In Fig. 10, the mounting hole 5 of the undercover 2 is formed larger than the outer diameter of the outer tubular portion 10 of the first clip 7 to allow the undercover to be displaced (e.g. displacement caused by thermal contraction due to cooldown of an thermally expanded region) along the underside of the floor panel due to its thermal deformation. In the fastening operation of the fastener to the undercover 2, the first clip 7 is positioned to allow the outer tubular portion 10 thereof to be inserted into the mounting hole 5 of the undercover 2, and the second clip 9 is positioned to allow the inner tubular portion 15 thereof to be inserted into the hollow space of the outer tubular portion 10 to be inserted into the mounting hole 5. The first clip 7 is pushed to insert the outer tubular portion 10 into the mounting hole 5, and the second clip 9 is pushed to insert the inner tubular portion 15 into the outer tubular portion 10 of the first clip 7. Thus, the undercover 2 is located between the first and second flanges 11, 17. When the first clip 7 and the second clip are pushed to press one another, the first coupling engagement potion 13 of the outer tubular portion 10 of the first clip 7 is slidably moved along the outer side of the inner tubular portion 15 of the second clip 9 to the second coupling engagement portion 23 while being bent by the outer side of the inner tubular portion 15, and the first coupling engagement potion 13 formed as an elastic-engagement-pawl configuration is engaged with the second coupling engagement potion 23 formed as an engagement-shoulder configuration. The first clip 7 and the second clip 9 are coupled with each other by the engagement between the first and second coupling engagement portions, and the first and second flanges 11, 17 clamp the undercover 2 with a predetermined clamping force capable of clamping the undercover 2 without its wobbling movement in the axial direction of the stud 3 while allowing the undercover to be displaced along the underside of the floor panel due to its thermal deformation.

Fig. 11 show the condition that the first and second clips 7, 9 coupled with one another clamp the undercover 2 with a predetermined clamping force capable of clamping the undercover 2 without its wobbling movement in the axial direction of the stud 3 while allowing the undercover to be displaced along the underside of the floor panel due to its thermal deformation. Since the first flange 11 is in contact with one side of the undercover 2 in its entirety, but the second flange 17 is in contact with the other side of the undercover 2 only at the outer edge 25, the above predetermined clamping force can be maintained. A predetermined gap 27 is provided between the outer diameter of the outer tubular portion 10 of the first clip 7 and the inner diameter of the mounting hole 5 to allow the undercover 2 to be displaced along the underside of the floor panel due to its thermal deformation, as shown by the arrow 29. The fastener 6 comprising the first and second clips 7, 9 is also fastened to each of other mounting holes formed at plural positions of the undercover 2. The undercover 2 having the fasteners will be transported to a car assembling line or the like.

In Fig. 11, an operator locates the undercover 2 having the fasteners 6 fastened thereto at a position allowing each of the plurality of studs 3 fixed at the predetermined positions of the underside 1 of the floor panel of the car body to be received in the hollow space of the inner tubular portion 15 of the second clip 9 of the fastener 6. In this operation, the operator is not required to handle or contact the fasteners at all because the fasteners 6 are pre-fastened to the undercover 2. Thus, the operator can concentrate the operation to positioning of the fasteners of the undercover to the corresponding studs. After the above positioning operation, the undercover 2 is pressed to the underside 1 of the floor panel to insert the stud 3 into the hollow space of the inner tubular portion 15 of the second clip 9. Through this operation, the stud 3 is inserted into the inner tubular portion 15, and the engagement pawl 19 formed inside the inner tubular portion 15 is bent outward to receive the stud 3 in the inner tubular portion. When the undercover 2 is further pressed to the underside 1, the engagement pawl 19 is stopped sliding and engaged with the thread root of the stud 3. Through this engagement, the undercover 2 is fixedly attached onto the underside 1 of the floor panel.

Fig. 12 shows the undercover fixedly attached onto the underside 1 of the floor panel by the fastener comprising the first and second clips 7, 9 and the stud 3. In Fig. 12, the first and second clips 7, 9 coupled with one another clamp the undercover with the predetermined clamping force capable of clamping the undercover 2 without its wobbling movement in the axial direction of the stud 3 while allowing the undercover to be displaced along the underside of the floor panel due to its thermal deformation. Thus, the undercover is attached onto the underside 1 of the floor panel having the studs 3 or to car body at an adequate position while allowing the undercover to be displaced along the underside of the floor panel due to its thermal deformation such as thermal contraction. Further, the undercover 2 can be attached through a simplified operation of positioning and pressing the undercover 2 to the car body. In addition, after pressing the undercover 2 to the car body, a tool such as a spanner or wrench may be engaged with the polygonal tubular portion 18 of the second clip 9 so as to rotate the second clip about the axis of the stud to provide tighter fastening of the engagement pawl 19. The fastening can also be released to detach the undercover 2 from the underside 1 of the floor panel by reversely rotating the polygonal tubular portion 18.

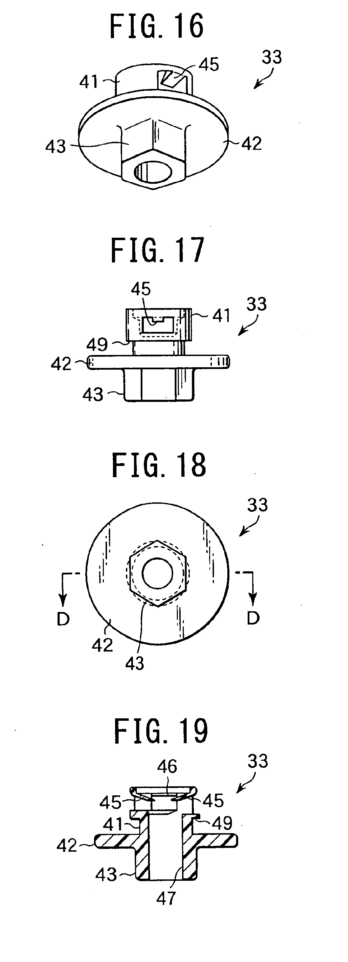

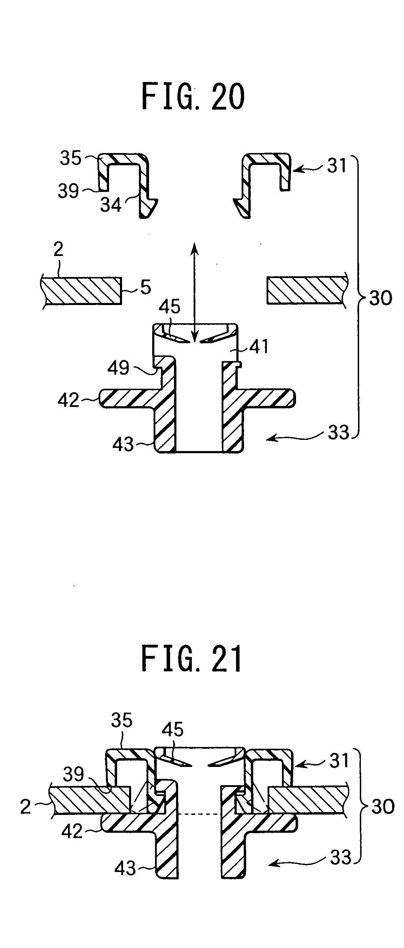

Figs. 13 to 23 show a fastener 30 (see Fig. 20) according to the second embodiment. The fastener 30 comprises an integrally molded first clip 31 made of synthetic resin as shown in Figs. 13 to 15, and an integrally molded second clip 33 made of synthetic resin as shown in Figs. 16 to 19. Figs. 20 to 23 show an operation of fixedly attaching the undercover 2 onto the underside 1 of the floor panel by using the fastener 30 comprising the first clip 31 and the second clip 33.

In Figs. 13 to 15, the first clip 31 comprises a hollow outer tubular portion 34 adapted to be inserted into the mounting hole of the undercover, and a first flange 35 formed at one of the ends of the outer tubular portion 34 and adapted to be brought into surface contact with one side of the undercover. The outer tubular portion 34 of the first clip 31 is formed as a hollow cylindrical body having an inner diameter greater than the outer diameter of an inner tubular portion of the second clip 33 so as to receive the inner tubular portion therein. The outer tubular portion 34 includes a first coupling engagement portion 37 serving as first-clip-side coupling means or one of coupling means for coupling the first clip 31 and the second clip 33 together. A portion of the outer tubular portion is divided by an axially extending slit 38 (Fig. 14) to form the first coupling engagement portion 13 having an elongated elastic-engagement-pawl configuration capable of being engaged with second-clip-side coupling means or the other coupling means when the inner tubular portion of the second clip 33 is inserted into the outer tubular portion 34. A plurality of first coupling engagement portions 37 are formed to reliably maintain the coupling with the second clip 33. As illustrated, the first flange 35 has a circular-ring-shaped outer edge 39 extending toward the lower end of the outer tubular portion 34 to be brought into contact with the surface of the undercover. This shape allows the first flange 35 to be brought into contact with the surface of the undercover only at the outer edge 39.

In Figs. 16 to 19, the second clip 33 comprises a hollow inner tubular portion 41 adapted to be inserted into the outer tubular portion 34 of the first clip 31, a second flange 42 formed at one of the ends of the inner tubular portion 41 and adapted to be brought into contact with the undercover opposite to the side with which the first flange 35 is to be brought into contact, and a polygonal (hexagonal in the illustrated embodiment) tubular portion 43 extending from the second flange 42 in the opposite direction with respect to the inner tubular portion 41 in the form of extending the inner tubular portion 41. A plurality (two in the illustrated embodiment) of elastic engagement pawls 45 adapted to be engaged with the stud are provided on the inner side of the inner tubular portion 41 at certain intervals in the circumferential direction. The inner tubular portion 41 is formed as a hollow tubular body having an inner diameter allowing the stud to be received therein and an outer diameter capable of being inserted into the outer tubular portion 34. In the illustrated embodiment, the inner tubular portion 41 is formed in a cylindrical shape having a stud receiving hole 46 at the other end (the upper end in Figs. 17 and 19) on the opposite side of the end having the second flange 42, and a reduced diameter portion on the side of the second flange 42.

Each of the engagement pawls 45 elastically extends toward the inside of the stud receiving space of the inner tubular portion 41, so as to bide into and engage with the threaded portion of the received stud to fasten the second clip 33 to the stud. The engagement pawls 45 does not have so strong engaging force but may just have an engaging force for allowing the second clip 33 to be temporarily fastened to the stud 3. As shown in Fig. 19, the polygonal tubular portion 43 is formed as a hexagonal hollow tubular body, and used to rotate the entire second clip 33 including the inner tubular portion 41 about the axis of the stud. The polygonal tubular portion 43 is formed as a tubular body having an inner diameter less than the outer diameter of the thread of the stud, so that it is threadedly engaged with the stud while being threaded by the thread of the stud. In the illustrated embodiment, the tubular portion having inner diameter less than the outer diameter of the thread of the stud is not only formed in the polygonal tubular portion 43 but also extended into a portion of the second flange 42 and the inner tubular portion 41. The small-inner-diameter tubular portion 47 is threadedly engaged with the thread of the stud by the rotation of the polygonal tubular portion 43 to serve as a final fastening portion for firmly fastening the second clip 33 to the stud.

The inner tubular portion 41 includes a second coupling engagement portion 49 serving as one of coupling means for coupling the second clip 33 to the first clip 31, on the outer peripheral surface thereof adjacent to the second flange 42. As shown in Figs. 17 to 19, the second coupling engagement portion 49 is formed in an engagement shoulder between a large-diameter portion having the engagement pawls 45 and a small-diameter portion adjacent to the second flange 42. When the inner tubular portion 41 is inserted into the outer tubular portion 34 of the first clip 31, the first coupling engagement portion 37 is engaged with the second coupling engagement portion 49 to couple the first clip 31 and the second clip 33 together.

The second flange 42 is formed in a flat circular plate shape allowing the second flange 42 to be brought into contact with the surface of the undercover in its entirety. On the other hand, the first flange 35 of the first clip 31 is formed to extend toward the lower end of the outer tubular portion 34 to allow the first flange 35 to be brought into contact with the surface of the undercover only at the outer edge 39. The respective shapes of the first and second flanges 35, 42 make it possible to clamp the undercover 2 with a clamping force capable of clamping the undercover 2 without its wobbling movement in the axial direction of the stud 3 while allowing the undercover to be displaced along the underside of the floor panel due to its thermal deformation, and to maintain the clamping force. In the same manner of the fastener according to the first embodiment, that clamping force is obtained. When the first and second coupling engagement portions 37, 49 are coupled with one another, a pressing force acting from the first and second flanges 35, 42 to the undercover 2 is selectively adjusted to allow the first and second flanges to clamp the undercover 2 without its wobbling movement in the axial direction of the stud 3 but not to excessively press the undercover.

In the fastener 30, the second clip 33 is firmly fastened to the stud 3 by the threaded engagement thereof. The second clip 33 is also formed to be fastened to the undercover to maintain the clamping force based on the first and second flanges 35, 42 in a predetermined level capable of clamping the undercover 2 without its wobbling movement in the axial direction of the stud 3 while allowing the undercover to be displaced along the underside of the floor panel due to its thermal deformation. In the second clip 33, the inner tubular portion 41 has an axial length that allows the first flange 35 to be brought into contact with the underside 1 of the floor panel and allows the second flange 42 of the second clip to press the undercover, when the top end (upper end in Fig. 17) of the inner tubular portion 41 is brought into contact with the underside 1 of the floor panel by the rotation of the polygonal tubular portion 43. This axial length is also set to maintain the predetermined clamping force and prevent the second flange 42 from pressing the undercover with an excessive force greater then the predetermined clamping force. Thus, when a tool such as spanner or wrench is engaged with the polygonal tubular portion 43 to threadedly engage the second clip 33 with the stud, the second clip 33 is tightly fastened to the stud 3 to firmly attach the undercover 2 onto the underside 1 of the floor panel while limiting the clamping force of the undercover based on the first and second clips within a certain range to allow the undercover to be displaced along the underside of the floor panel due to its thermal deformation such as thermal contraction.

A fastening operation of the fastener 30 comprising the first and second clips 31, 33 will be described with reference to Figs. 20 to 23 about the clamping of the undercover 2 therebetween and then attaching the undercover 2 with the fasteners onto the underside 1 of the floor panel having the studs 3 fixed thereon. In Fig. 20, the mounting hole 5 of the undercover 2 is formed larger than the outer diameter of the outer tubular portion 34 of the first clip 31, so as to allow the undercover to be displaced along the underside of the floor panel due to its thermal deformation. The first clip 31 is positioned to allow the outer tubular portion 34 thereof to be inserted into the mounting hole 5 of the undercover 2, and the second clip 33 is positioned to allow the inner tubular portion 41 thereof to be inserted into the hollow space of the outer tubular portion 34 to be inserted into the mounting hole 5. The first clip 31 is pushed to insert the outer tubular portion 31 into the mounting hole 5, and the second clip 33 is pushed to insert the inner tubular portion 41 into the outer tubular portion 34 of the first clip 31. Thus, the undercover 2 is placed between the first and second flanges 35, 42. Then, when the first clip 31 and the second clip are pushed to press one another, the first coupling engagement potion 37 of the outer tubular portion 34 of the first clip 31 is slidably moved along the outer side of the inner tubular portion 41 of the second clip 33 to the second coupling engagement portion 49 while being bent by the outer side of the inner tubular portion 41, and the first coupling engagement potion 37 formed as an elastic-engagement-pawl configuration is engaged with the second coupling engagement potion 49 formed as an engagement-shoulder configuration. The first clip 31 and the second clip 33 are coupled with each other by the engagement thereof between the first and second coupling engagement portions, and the first and second flanges 35, 42 clamp the undercover 2 with the predetermined clamping force capable of clamping the undercover 2 without its wobbling movement in the axial direction of the stud 3 while allowing the undercover to be displaced along the underside of the floor panel due to its thermal deformation.

Fig. 21 shows the condition that the first and second clips 31, 33 coupled with one another clamp the undercover 2 with a predetermined clamping force capable of clamping the undercover 2 without its wobbling movement in the axial direction of the stud 3 while allowing the undercover to be displaced along the underside of the floor panel due to its thermal deformation. The second flange 42 is in contact with one side of the undercover 2 in its entirety, but the first flange 35 of the first clip is in contact with the other side of the undercover 2 only at the outer edge 39, so that the above predetermined clamping force can be maintained. A certain gap is provided between the outer diameter of the outer tubular portion 34 of the first clip 31 and the inner diameter of the mounting hole 5 to allow the undercover 2 to be displaced along the underside of the floor panel due to its thermal deformation. The undercover 2 with the fasteners will be transferred to a car assembling line or the like.

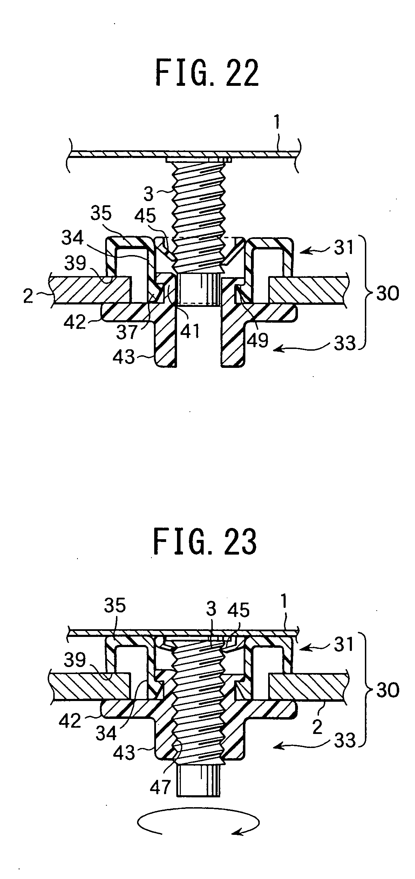

In Fig. 22, an operator locates the undercover 2 having the fasteners 30 fastened thereto at a position allowing each of the studs 3 fixed at the predetermined positions of the underside 1 of the floor panel of the car body to be received in the hollow space of the inner tubular portion 41 of the corresponding second clip 33. The operator is not required to handle or contact the fasteners at all because the fasteners 30 are pre-fastened to the undercover 2. Thus, the operator can concentrate the operation to positioning of the undercover. Then, the undercover 2 is pressed to the underside 1 of the floor panel to insert the stud 3 into the hollow space of the inner tubular portion 41 of the second clip 33. Through this operation, the stud 3 is inserted into the inner tubular portion 41, and the engagement pawls 45 formed inside the inner tubular portion 41 are bent outward to receive the stud 3 in the inner tubular portion, and engaged with the thread root of the stud 3. Through this engagement, the undercover 2 is fixedly attached onto the underside 1 of the floor panel.

Fig. 32 shows a fixedly attached condition. In order to achieve this fixedly attached condition, a tool such as a spanner or wrench is engaged with the polygonal tubular portion 43 of the second clip 33 in the position of Fig. 22 to rotate the second clip 33 about the axis of the stud 3. Through this operation, the small-inner-diameter tubular portion 47 inside the polygonal tubular portion 43 is threaded by the thread of the stud, and the range of the threaded engagement between the stud and the small-inner-diameter tubular portion 47 is gradually increased. The threaded engagement allows the second clip 33 to be tightly fastened to the stud 3 so as to strengthen the temporary fastening based on the engagement pawls 45. In the second clip 33, the axial length of the inner tubular portion 41 is set to allow the first flange 35 to be brought into contact with the underside 1 of the floor panel and allows the second flange 42 to press the undercover, when the top end (upper end in Fig. 17) of the inner tubular portion 41 is brought into contact with the underside 1 of the floor panel by the rotation of the polygonal tubular portion 43. This axial length is also set to maintain the predetermined clamping force and prevent the second flange 42 from pressing the undercover with an excessive force greater then the predetermined clamping force. Thus, when a tool such as spanner or wrench is engaged with the polygonal tubular portion 43 to threadedly engage the second clip 33 with the stud, the second clip 33 is tightly fastened to the stud 3 to firmly attach the undercover 2 onto the underside 1 of the floor panel while limiting the clamping force of the undercover based on the first and second clips within a certain range to allow the undercover to be displaced along the underside of the floor panel due to its thermal deformation such as thermal contraction. The fastening can be released by reversely rotating the polygonal tubular portion 43.

According to the present invention, the first and second flanges of the first and second clips can be fastened to the undercover while clamping the undercover therebetween. That is, the fastener can be fastened to the undercover in advance. The pre-fastened fastener makes it possible to readily carry the undercover with the fastener held therein. Thus, the undercover can be attached onto the underside of the floor panel of the car body through a simple attaching operation of adequately positioning the undercover with the fastener to the underside of the floor panel and then pressing the undercover to the underside of the floor panel while inserting the stud into the fastener. Further, the first and second clips are formed to allow the first and second flanges to clamp the undercover therebetween with a predetermined clamping force capable of clamping the undercover without its wobbling movement in the axial direction of the stud while allowing the undercover to be displaced along the underside of the floor panel due to its thermal deformation. Thus, after the attaching operation, the undercover can be displaced along the underside of the floor panel due to its thermal deformation such as thermal contraction to eliminate the risk of plastic deformation of the undercover.

### [LEGEND]

- 1:: underside of floor panel of car body
- 2, 2A and 2B:: undercover
- 3:: stud
- 5:: mounting hole of undercover
- 6:: fastener according to first embodiment
- 7:: first clip
- 9:: second clip
- 10:: outer tubular portion
- 11:: flange of first clip
- 13:: first coupling engagement portion
- 14:: slit
- 15:: inner tubular portion
- 17:: flange of second clip
- 18:: polygonal tubular portion
- 19:: engagement pawl
- 21:: stud receiving hole
- 22:: rib
- 23:: second coupling engagement portion
- 25:: outer edge of flange
- 27:: gap
- 30:: fastener according to second embodiment
- 31:: first clip according to the second embodiment
- 33:: second clip according to the second embodiment
- 34:: outer tubular portion
- 35:: flange of first clip
- 37:: first coupling engagement portion
- 38:: slit
- 39:: outer edge
- 41:: inner tubular portion
- 42:: flange of second clip
- 43:: polygonal tubular portion
- 45:: engagement pawl
- 46:: stud receiving hole
- 47:: small-inner-diameter tubular portion
- 49:: second coupling engagement portion

## Claims

1. An undercover attaching assembly for attaching an undercover onto the underside of a floor panel of a car body, comprising studs fixed at predetermined positions of the underside of said floor panel, mounting holes formed in said undercover to receive said studs therein, each of said studs being adapted to be inserted into each of the respective mounting holes and fasteners for attaching said undercover onto the underside of said floor panel, each fastener being engaged with each of the respective studs;
wherein said fastener comprises a first clip (7) including a hollow outer tubular portion (10) adapted to be inserted into said mounting hole of said undercover; and a second clip (9) including a hollow inner tubular portion (15) adapted to be inserted into said outer tubular portion (10) of said first clip (7), and an engagement pawl (19) adapted to be engaged with said stud,
wherein said first clip (7) is formed with a first flange (11) adapted to be brought into contact with one side of said undercover when said outer tubular portion is inserted into said mounting hole; said second clip (9) is formed with a second flange (17) adapted to be brought into contact with the other side of said undercover when said inner tubular portion is inserted into said outer tubular portion; **characterized in that** said outer and inner tubular portions are formed with first and second coupling means (13, 23) for connecting the outer and inner tubular portions to each other, whereby when said outer tubular portion (10) is inserted into said mounting hole of said undercover and then said inner tubular portion (15) is inserted into said outer tubular portion to couple said first and second clips together by said coupling means, said first and second flanges (11, 17) are brought into contact with the respective sides of said undercover around the periphery of said mounting hole to clamp said undercover therebetween, and
wherein said mounting hole of said undercover has a diameter larger than the outer diameter of said outer tubular portion (10) to allow said undercover to be displaced along the underside of said floor panel due to its thermal deformation, and said first and second clips (7, 9) are formed to allow said first and second flanges (11, 17) to clamp said undercover therebetween with a predetermined clamping force capable of clamping said undercover without its wobbling movement in the axial direction of said stud while allowing said undercover to be displaced along the underside of said floor panel due to its thermal deformation.

2. The undercover attaching assembly as defined in claim 1, wherein said stud (3) is a threaded stud, and said second clip (9) includes said inner tubular portion (15) having said engagement pawl (19) formed in the inside thereof, said second flange (17) formed at one end of said inner tubular portion, and a polygonal tubular portion (18) extending from said second flange in the form of extending said inner tubular portion, said polygonal tubular portion (18) being formed as a tubular body having an inner diameter greater than the outer diameter of the thread of said stud to allow said polygonal tubular portion to be free from engagement with the thread of said stud, said polygonal tubular portion being operable to be rotated about the axis of said stud by a tool engaged with said polygonal tubular portion, so as to either provide tighter fastening of said engagement pawl or release said fastening.

3. The undercover attaching assembly as defined in claim 2, wherein said second flange (17) has an outer edge (25) formed to extend toward the other end of said inner tubular portion so as to allow said second flange to be brought into contact with one side of said undercover only at said outer edge.

4. The undercover attaching assembly as defined in claim 3, wherein said first flange (11) has a surface formed in a flat plate shape capable of being brought into contact with the other surface of said undercover in its entirety.

5. The undercover attaching assembly as defined in claim 4, wherein a portion of said outer tubular portion (10) is divided by an axially extending slit (14) to form a first coupling engagement portion (13) serving as said first coupling means of said first clip (7); and the outer surface of said inner tubular portion (15) is formed with a second coupling engagement portion (23) serving as said second coupling means of said second clip (9), said second coupling engagement portion (23) being adapted to be engaged with said first coupling engagement portion (13); and wherein said first and second coupling engagement portions are formed to allow said first and second flanges (11, 17) to be spaced apart from each other by an axial distance equal to or slightly less than the thickness of said undercover so as to provide said predetermined clamping force, under the condition that said first and second coupling engagement portions are engaged with one another.

6. The undercover attaching assembly as defined in claim 1, wherein said stud (3) is a threaded stud, and said second clip (33) includes said inner tubular portion (41) having said engagement pawl (45) formed in the inside thereof, said second flange (42) formed at one of the ends of said inner tubular portion, and a polygonal tubular portion (43) extending from said second flange in the form of extending said inner tubular portion, said polygonal tubular portion being formed as a tubular body having an inner diameter less than the outer diameter of the thread of said stud, so as to allow said polygonal tubular portion to be engaged with the thread of said stud, said polygonal tubular portion being operable to be rotated about the axis of said stud by a tool engaged with said polygonal tubular portion, so as to allow said polygonal tubular portion to either be threadedly engaged with said stud or release said threaded engagement with said stud.

7. The undercover attaching assembly as defined in claim 6, wherein said first flange (35) is formed at one of the ends of said outer tubular portion (34) of said first clip (31), said first flange having an outer edge (39) formed to extend toward the other end of said outer tubular portion so as to allow said first flange to be brought into contact with one side of said undercover only at said outer edge.

8. The undercover attaching assembly as defined in claim 7, wherein said second flange (42) has a surface formed in a flat plate shape capable of being brought into contact with the other surface of said undercover in its entirety.

9. The undercover attaching assembly as defined in claim 8, wherein a portion of said outer tubular portion (34) is divided by an axially extending slit (38) to form a first coupling engagement portion (37) serving as said first coupling means of said first clip (31); and said second coupling means of said second clip (33) is a second coupling engagement portion (49) adapted to be engaged with said first coupling engagement portion, and wherein said first and second coupling engagement portions are formed to allow said first and second flanges to be spaced apart from each other by an axial distance equal to or slightly less than the thickness of said undercover so as to provide said predetermined clamping force, under the condition that said first and second coupling engagement portions are engaged with one another.

10. The undercover attaching assembly as defined in claim 9, wherein said inner tubular portion (41) of said second clip (33) has an axial length which allows said first flange to be brought into contact with the underside of said floor panel and allows said second flange (42) to press said undercover, when the top end of said inner tubular portion is brought into contact with the underside of said floor panel by the rotation of said polygonal tubular portion (43).
